# EUROPEAN PATENT SPECIFICATION

(11) **EP 3 501 886 B1**
(45) Date of publication and mention of the grant of the patent: **20.01.2021**
(21) Application number: 17208648.0
(22) Date of filing: 19.12.2017
(51) Int. Cl.: B60N 2/02, B60N 2/00

(54) **VEHICLE AND METHOD OF ASSOCIATING VEHICLE SETTINGS WITH A USER OF THE VEHICLE**
FAHRZEUG UND VERFAHREN ZUM ZUORDNEN VON FAHRZEUGEINSTELLUNGEN ZU EINEM BENUTZER DES FAHRZEUGS
VÉHICULE ET PROCÉDÉ D'ASSOCIATION DE PARAMÈTRES DE VÉHICULE AVEC UN UTILISATEUR DU VÉHICULE

(43) Date of publication of application: 26.06.2019
(73) Proprietor: Vestel Elektronik Sanayi ve Ticaret A.S., 45030 Manisa (TR)
(72) Inventor: ÇUBUKÇU, Baran, 45030 Manisa (TR)
(74) Representative: Flint, Adam

(56) References cited:
- EP-A1- 1 870 295
- US-A1- 2014 052 343
- US-A1- 2017 057 436

## Description

### Technical Field

The present disclosure relates to a vehicle and a method of associating vehicle settings of a vehicle with a user of the vehicle.

### Background

Each user of a vehicle, be they a driver or passenger of a car, van, truck, etc. has their own particular vehicle settings preferences. For example, each driver may place the vehicle's mirrors, steering wheel and driver's seat at their preferred position and angle. Whatever the particular vehicle setting is, the user may have to reconfigure the vehicle settings depending on the state in which the settings were left when the vehicle was last used or if the vehicle settings revert to a particular setting after use. This is particularly problematic when a vehicle is often used by different users. Reconfiguring the vehicle settings every time a user uses the vehicle is time consuming and frustrating for the user.

US2014052343A1 discloses a system for storing and retrieving seating and instrument positions based on user characteristics. The system stores seating and instrument positions for a variety of user heights or weights and retrieves an initial seating and instrument position setting based on the user's input. Preferably, the stored settings are ergonomic for the user's characteristics.

EP1870295A1 discloses a vehicle occupant detecting system for easily and precisely detecting information about a vehicle occupant on a vehicle seat. The vehicle occupant detecting system employs a system for detecting a three-dimensional surface profile of a vehicle occupant from a single view point by a camera to detect a distance between predetermined regions and/or a position of a predetermined region of the vehicle occupant, thereby detecting the physique and/or the attitude of the vehicle occupant.

### Summary

According to a first aspect disclosed herein, there is provided a method of associating vehicle settings of a vehicle with a user of the vehicle, the method comprising: obtaining an identifier for the user by measuring a shoulder width value of the user; creating or loading a user profile for the user associated with the identifier, the user profile containing one or more vehicle settings set by the user.

In an example, obtaining an identifier for the user comprises measuring a shoulder width value of the user and a weight value of the user.

In an example, the method comprises: measuring a shoulder width value of a user seated in a seat of the vehicle; if the shoulder width value of the user seated in the seat of the vehicle differs from the shoulder width value of a user associated with a previously stored user profile by less than a threshold, implementing the one or more vehicle settings contained in the previously stored user profile; and if the shoulder width value of the user seated in the seat of the vehicle differs from the shoulder width value of a user associated with a previously stored user profile by more than a threshold, creating a user profile for the new user associated with the shoulder width value of the new user, the user profile for the new user containing one or more vehicle settings set by the new user.

In an example, the method comprises: preventing a user seated in the seat of the vehicle from operating the vehicle if at least one of: (i) the shoulder width value of said user does not match a shoulder width value of a user associated with a previously stored user profile and (ii) the shoulder width value of said user is less than a minimum value
In an example, the one or more vehicle settings contained in the previously stored user profile are implemented only if the shoulder width value and the weight value of the seated user differ from the shoulder width value and the weight value of the user associated with a previously stored user profile by amounts less than respective thresholds.

In an example, the threshold is based on a time period between measuring the shoulder width value of the user seated in the seat of the vehicle and measuring the shoulder width value of the user associated with a previously stored user profile.

In an example, measuring the shoulder width value of the user comprises using a touch sensor and/or a pressure sensor in a seat of the vehicle in which the user is sitting.

In an example, the method comprises transmitting a notification to a user associated with a previously stored user profile if the shoulder width value of a user seated in the seat of the vehicle does not match the shoulder width value of the user associated with a previously stored user profile.

In an example, the method comprises: determining that a user is no longer sitting in a seat of the vehicle; and controlling the seat such that it is positioned at a maximum distance from a steering wheel of the vehicle.

According to a second aspect disclosed herein, there is provided a computer program comprising instructions such that when the computer program is executed on a computing device, the computing device is arranged to carry out any method as described above.

According to a third aspect disclosed herein, there is provided a vehicle, the vehicle comprising: one or more sensors configured to measure a shoulder width value of a user; and a processor configured to create or load a user profile for the user associated with the measured shoulder width value, the user profile containing one or more vehicle settings set by the user.

In an example, the one or more sensors are configured to measure a shoulder width value of a user are located in one or more shoulder rests of a seat of the vehicle.

In an example, the vehicle comprises a weight sensor for weighing a user seated in a seat of the vehicle.

In an example, the processor is configured to: implement the one or more vehicle settings contained in a previously stored user profile if the shoulder width value of a user seated in the seat of the vehicle differs from the shoulder width value of a user associated with the previously stored user profile by less than a threshold; and create a user profile for a user associated with the shoulder width value of the user if the shoulder width value of the user seated in the seat of the vehicle differs from the shoulder width value of a user associated with a previously stored user profile by more than a threshold, the user profile for the new user containing one or more vehicle settings set by the new user.

In an example, the processor is configured to: prevent a user seated in the seat of the vehicle from operating the vehicle if at least one of: (i) the shoulder width value of said user does not match a shoulder width value of a user associated with a previously stored user profile and (ii) the shoulder width value of said user is less than a minimum value.

In an example, the processor is configured to: cause a notification to be transmitted to a user associated with a previously stored user profile if the shoulder width value of a user seated in the seat of the vehicle does not match the shoulder width value of the user.

### Brief Description of the Drawings

To assist understanding of the present disclosure and to show how embodiments may be put into effect, reference is made by way of example to the accompanying drawings in which:
Figure 1 shows schematically an example seat of the vehicle in which sensors for measuring a shoulder width value of a user are located; and
Figure 2 shows schematically a block diagram of a vehicle containing one or more sensors for measuring a shoulder width value of a user.

### Detailed Description

When a user (a driver or passenger) sits in a vehicle they tend to change one or more of the vehicle's settings, such as the mirror position, seat position, seat angle, radio station, etc. based on their own personal preferences or for safety reasons.

Previous systems have attempted to make it quicker and easier for users to implement their preferred settings by allowing a user to create a user profile and associate their preferred settings with their own user profile. Then each time a user enters the vehicle they can manually load their user profile and the car may, depending on the setting, implement the preferred settings. A problem with prior systems is that it is time consuming and cumbersome for a user to manually enter some identification so as to load their user profile each time they use the vehicle. Examples described herein provide a more efficient and user-friendly method of organizing vehicle settings based on the user who is seated in the vehicle.

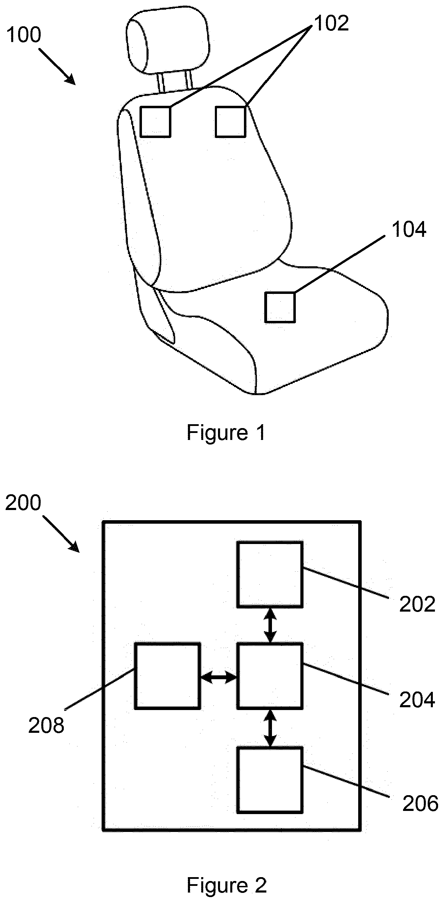

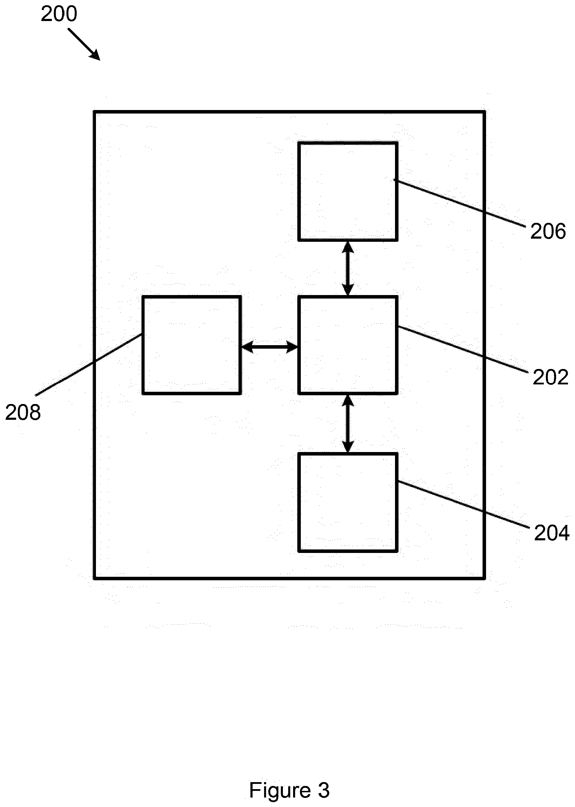

Figure 1 shows an example seat 100 of a vehicle. The seat 100 may be a driver's car seat or a passenger's car seat of any vehicle containing seats. For example, the vehicle may be a car, a van, a lorry or truck, a motorcycle, etc.

In this example, the seat 100 contains one or more sensors 102 for measuring a shoulder width value of a user seated in the seat 100. For example, the one or more sensors 102 may be touch sensors, pressure sensors, mechanical actuators, proximity sensors, optical sensors, infrared sensors, etc. The one or more sensors 102 may be located at the edge(s) of the seat 100 or across the entirety of the seat 100. That is, there may be two (or more) sensors 102 at the edges of the seat 100 or one continuous sensor. Whilst the one or more sensors 102 are shown located in a seat 100 of the vehicle, they may alternatively or additionally be located elsewhere in the vehicle. For example, an optical sensor may be located in the frame of the vehicle or in the vehicle's rear view mirror.

The seat 100 may also contain a weight sensor 104 for measuring the weight of a user seated in the seat 100. The weight sensor 104 may be, for example, a spring weighing scale or a load cell that uses a transducer to create an electrical signal whose magnitude is proportional to the force being measured.

Figure 2 shows a block diagram of an example vehicle 200. The vehicle 200 contains one or more sensors 102 for measuring a shoulder width value of a user of the vehicle 200. The one or more sensors 102 are operatively coupled to a processor 204. The processor 204 is also operatively coupled to a weight sensor 104 for weighing a user of the vehicle 200 in this example. The processor 204 in this example is also operatively coupled to a wireless transmitter or wireless transceiver 208 for communicating via any suitable wireless medium, e.g. a radio transceiver for communicating via a radio channel (though other forms are not excluded, e.g. an infrared transceiver). The wireless transceiver 208 may comprise a Wi-Fi, Bluetooth, etc. interface for enabling the vehicle 200 to communicate wirelessly with a device of a user of the vehicle 200.

When a user of the vehicle 200 (e.g. the driver) sits in a seat 100 of the vehicle 200 their shoulder width is measured using one or more sensors 102. For example, the sensors 102 may be touch sensors or pressure sensors in shoulder rests of the seat 100 or otherwise located in the seat 100 near where a user's shoulders rest during normal seating. An identifier of the user is obtained from the measured shoulder width. On the basis of the user's shoulder width, a user profile associated with the identifier is either created if the identifier is new or loaded if the identifier is already known. The user profile contains one or more vehicle settings relating to the user identified by the identifier. For example, user profile may contain information pertaining to the user's preferred seat or mirror positions.

In this way, a user does not have to manually save or store their preferred vehicle settings with a profile. Instead, the vehicle settings may be automatically associated and stored on the basis of a shoulder width value that has been measured. Another advantage of this is the user's vehicle settings are automatically loaded when they sit in the seat 100 without any additional user input, allowing the user to start driving with their preferred settings straight away. As a further advantage, in some cases users of the vehicle 200 can be identified even if their shoulder width is the same or similar. This is due to each driver having their own unique driving style. For example, one user may sit upright with their shoulders against the seat 100, whilst another user may lean forward and a further user slouches in their seat 100. Therefore, each user's measured shoulder width value may be different even if their actual shoulder widths are the same.

As well as measuring the user's shoulder width value, as an optional feature the user's weight value may also be measured to obtain the identifier of the user. This may further help to distinguish between users with the same or similar shoulder widths. For example, it is unlikely that two or more users will have identical/similar shoulder width values and weight values, thus allowing a user to be uniquely identified.

In some examples, a shoulder width value of a user seated in the seat 100 is measured and if the measured value matches that of a known user profile, the vehicle settings of the known user profile are loaded. For example, the main user of the vehicle 200 already has a user profile in which their settings are contained. When the main user enters the vehicle 200, their shoulder width is measured, e.g. by touch sensors in the shoulder rests of the seat 100, the vehicle 200 recognises the main user and implements the user's preferred settings. However, if the user's shoulder width value does not match that of a known user profile, a new user profile for the first time user may be created. An advantage of this feature is that multiple users' vehicle settings can be stored and loaded each time the respective user subsequently sits in the vehicle 200.

As an expansion of the above optional feature, in some examples both the shoulder width value and the weight value of the seated user must match those of a known user profile in order for the vehicle settings to be applied. An advantage of this is that users with similar shoulder width values can be distinguished more easily so that their own settings can be applied.

From time to time, a user may wish to change their vehicle settings. In some cases, the vehicle settings associated with a user's identifier will be automatically updated when the user changes a vehicle setting. For example, if the user changes the vehicle's climate settings (e.g. heating, air conditioning, etc.), when the user profile is next loaded, the most recently applied vehicle settings will be implemented. An advantage of this is that the user does not have to manually save vehicle settings to their user profile.

As an option, a user may not be allowed to drive or even start the vehicle's engine if the user is not recognised. For example, if the user's shoulder width value does not match that of a known user profile, the unknown user may be a thief attempting to steal the vehicle 200. In another example, the unknown user may be someone who has not been authorised by a known user of the vehicle 200 (e.g. the owner of the vehicle 200). Therefore in some examples, a user profile is only created for a new user if a known user authorises the creation of the user profile. As an alternative or additional option, if the user's shoulder width value is less than a minimum shoulder width value, the user may be prevented from driving the vehicle 200. For example, this may indicate that the user attempting to drive the vehicle 200 is a child. As an advantage of this, an unknown user or an underage user can be prevented from operating the vehicle 200, which may in turn prevent theft or damage of the vehicle 200 or occupant(s) or third parties.

A measured shoulder width value may be regarded as matching that of a previously stored shoulder width value if they are identical or if they are sufficiently similar. Two values are sufficiently similar if the two values differ by less than a threshold (and the threshold may be zero to match identical values). For example, if a user's shoulder width value is measured to be 79 cm on the first day they use the car and the user does not use the car for several weeks, the next time their shoulder width is measured it may be slightly more or less than 79 cm, e.g. 81 cm. Allowing the measured shoulder width values to be regarded as matching if they differ by less than a threshold prevents a new user profile being created for a known user, and may even prevent a known user being prevented from driving the vehicle 200, as it allows for small measurement errors to be tolerated. However, if the seated user's measured shoulder width differs greatly from a previously known value, the seated user is unlikely to be the same user whose shoulder width was measured previously. As a specific example to illustrate this, if the seated user's measured shoulder width is 86 cm, the seated user is unlikely to be the same user who previously measured at 79 cm. Therefore a threshold of around +/- 3 cm may be appropriate. Similarly, a seated user's weight value may be regarded as matching that of a known user profile if the measured values differ by less than a threshold. As an advantage, this allows for a user's daily fluctuations in weight. The threshold may be set at the average user's weight fluctuation (e.g. +/- 1 kg).

As an option, the threshold(s) may be based on the time between measurements of users of the vehicle 200. For example, if a user's shoulder width value is measured at 12pm on a Monday and a user's shoulder width value is measured two hours later, there should be minimal change in the user's shoulder width value. The threshold may be set to be only 1 cm in such a case. However, if a user's shoulder width is not measured until two weeks later, the user's shoulder width may be expected to have changed more, for example, due to weight gain or loss. The threshold may therefore be larger for longer periods of time between measurements. The same applies for the threshold between two measured weight values. An advantage of this option is that users can be recognised even if they have gained or lost a little weight between readings.

If the seated user's shoulder width value and/or weight value differs from the known user's shoulder width value and/or weight value by less than a respective threshold, the stored identifier can be updated to reflect the new values. An advantage of this is that the user's values are compared to the most recent measurements, minimizing the chance of a known user not being recognised at a later point in time.

In some examples, the vehicle 200 (via for example the wireless transmitter 208) may transmit a notification to inform a user of the vehicle 200 if an unknown user is sat in a seat 100 of the vehicle 200. For example, a user is regarded as unknown if their shoulder width value does not match that of a previously stored user profile. Upon recognising an unknown user, a message may be sent to a user's mobile or smart phone, laptop computer, or other device. An advantage of this is that the user can be alerted to a potential theft or unauthorised person attempting to drive their car. As an additional feature, the vehicle 200 may track its movements (e.g. by Global Positioning Systems) and transmit this information to the user. As another additional or alternative feature, the notification may allow the user to authorise the unknown user to operate the vehicle 200. That is, the vehicle 200 can receive a notification from the authorised user's device which allows the unknown user to, for example, start the ignition of the vehicle 200.

As an option, the one or more sensors 102 or the weight sensor 104 may determine that a user has exited the vehicle 200, i.e. the user is no longer sitting in the vehicle 200. When the user leaves their seat 100, the seat 100 can be rearranged to be at its maximum distance from a steering wheel. An advantage of this is that it is easier for the next user to enter the vehicle 200. This option can be applied to both driver and passenger seats.

The processor and its components as shown in Figure 2 are represented as a schematic block diagram for the purposes of explaining the functionality of the processor only. Hence, it is understood that each component of the controller is a functional block for performing the functionality ascribed to it herein. Each component may be implemented in hardware, software, firmware, or a combination thereof. Additionally, although described as separate components of the controller, some or all of the functionality may be performed by a single piece of hardware, software, or firmware.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of associating vehicle settings of a vehicle (200) with a user of the vehicle (200), the method comprising:
obtaining an identifier for the user by measuring a shoulder width value of the user;
creating or loading a user profile for the user associated with the identifier, the user profile containing one or more vehicle settings set by the user.

2. A method according to claim 1, wherein obtaining an identifier for the user comprises measuring a shoulder width value of the user and a weight value of the user.

3. A method according to claim 1 or claim 2, the method comprising:
measuring a shoulder width value of a user seated in a seat (100) of the vehicle (200);
if the shoulder width value of the user seated in the seat (100) of the vehicle (200) differs from the shoulder width value of a user associated with a previously stored user profile by less than a threshold, implementing the one or more vehicle settings contained in the previously stored user profile; and
if the shoulder width value of the user seated in the seat (100) of the vehicle (200) differs from the shoulder width value of a user associated with a previously stored user profile by more than a threshold, creating a user profile for the new user associated with the shoulder width value of the new user, the user profile for the new user containing one or more vehicle settings set by the new user.

4. A method according to claim 3, the method comprising:
preventing a user seated in the seat (100) of the vehicle (200) from operating the vehicle (200) if at least one of: (i) the shoulder width value of said user does not match a shoulder width value of a user associated with a previously stored user profile and (ii) the shoulder width value of said user is less than a minimum value.

5. A method according to claim 3 or claim 4, wherein the threshold is based on a time period between measuring the shoulder width value of the user seated in the seat (100) of the vehicle (200) and measuring the shoulder width value of the user associated with a previously stored user profile.

6. A method according to any of claims 1 to 5, wherein measuring the shoulder width value of the user comprises using a touch sensor and/or a pressure sensor in a seat (100) of the vehicle (200) in which the user is sitting.

7. A method according to any of claims 1 to 6, the method comprising transmitting a notification to a user associated with a previously stored user profile if the shoulder width value of a user seated in the seat (100) of the vehicle (200) does not match the shoulder width value of the user associated with a previously stored user profile.

8. A method according to any of claims 1 to 7, the method comprising:
determining that a user is no longer sitting in a seat (100) of the vehicle (200); and
controlling the seat (100) such that it is positioned at a maximum distance from a steering wheel of the vehicle (200).

9. A computer program comprising instructions such that when the computer program is executed on a computing device, the computing device is arranged to carry out a method according to any of claims 1 to 8.

10. A vehicle (200), the vehicle (200) comprising:
one or more sensors (102) configured to measure a shoulder width value of a user; and
a processor (204) configured to create or load a user profile for the user associated with the measured shoulder width value, the user profile containing one or more vehicle settings set by the user.

11. A vehicle (200) according to claim 10, wherein the one or more sensors (102) are configured to measure a shoulder width value of a user are located in one or more shoulder rests of a seat (100) of the vehicle (200).

12. A vehicle (200) according to claim 10 or claim 11, comprising a weight sensor (104) for weighing a user seated in a seat (100) of the vehicle (200).

13. A vehicle (200) according to any of claims 10 to 12, the processor (204) being configured to:
implement the one or more vehicle settings contained in a previously stored user profile if the shoulder width value of a user seated in the seat (100) of the vehicle (200) differs from the shoulder width value of a user associated with the previously stored user profile by less than a threshold; and j
create a user profile for a user associated with the shoulder width value of the user if the shoulder width value of the user seated in the seat (100) of the vehicle (200) differs from the shoulder width value of a user associated with a previously stored user profile by more than a threshold, the user profile for the new user containing one or more vehicle settings set by the new user.

14. A vehicle (200) according to any of claims 10 to 13, the processor (204) being configured to:
prevent a user seated in the seat (100) of the vehicle (200) from operating the vehicle (200) if at least one of: (i) the shoulder width value of said user does not match a shoulder width value of a user associated with a previously stored user profile and (ii) the shoulder width value of said user is less than a minimum value.

15. A vehicle (200) according to any of claims 10 to 14, the processor (204) being configured to:
cause a notification to be transmitted to a user associated with a previously stored user profile if the shoulder width value of a user seated in the seat (100) of the vehicle (200) does not match the shoulder width value of the user.

## Patentansprüche

1. Verfahren zum Zuordnen von Fahrzeugeinstellungen eines Fahrzeugs (200) zu einem Benutzer des Fahrzeugs (200), wobei das Verfahren aufweist:
Erhalten eines Identifikators für den Benutzer durch Messen eines Schulterbreitenwerts des Benutzers;
Erstellen oder Laden eines Benutzerprofils für den mit dem Identifikator verbundenen Benutzer, wobei das Benutzerprofil ein oder mehr vom Benutzer eingestellte Fahrzeugeinstellungen enthält.

2. Verfahren nach Anspruch 1, bei welchem das Erhalten eines Identifikators für den Benutzer ein Messen eines Schulterbreitenwerts des Benutzers und eines Gewichtswerts des Benutzers aufweist.

3. Verfahren nach Anspruch 1 oder Anspruch 2, wobei das Verfahren aufweist:
Messen eines Schulterbreitenwerts eines Benutzers, der auf einem Sitz (100) des Fahrzeugs (200) sitzt;
wenn der Schulterbreitenwert des auf dem Sitz (100) des Fahrzeugs (200) sitzenden Benutzers von dem Schulterbreitenwert eines einem früher gespeicherten Benutzerprofil zugeordneten Benutzers um weniger als ein Schwellenwert abweicht, Implementieren der ein oder mehr in dem früher gespeicherten Benutzerprofil enthaltenen Fahrzeugeinstellungen; und
wenn der Schulterbreitenwert des auf dem Sitz (100) des Fahrzeugs (200) sitzenden Benutzers von dem Schulterbreitenwert eines einem früher gespeicherten Benutzerprofil zugeordneten Benutzers um mehr als ein Schwellenwert abweicht, Erstellen eines Benutzerprofils für den neuen Benutzer, das mit dem Schulterbreitenwert des neuen Benutzers verbunden ist, wobei das Benutzerprofil für den neuen Benutzer ein oder mehr vom neuen Benutzer eingestellte Fahrzeugeinstellungen enthält.

4. Verfahren nach Anspruch 3, wobei das Verfahren aufweist:
Verhindern, dass ein auf dem Sitz (100) des Fahrzeugs (200) sitzender Benutzer das Fahrzeug (200) bedient, falls (i) der Schulterbreitenwert dieses Benutzers nicht mit einem Schulterbreitenwert eines einem früher gespeicherten Benutzerprofil zugeordneten Benutzers übereinstimmt und/oder (ii) der Schulterbreitenwert des Benutzers kleiner als ein Mindestwert ist.

5. Verfahren nach Anspruch 3 oder Anspruch 4, bei welchem der Schwellenwert auf einer Zeitspanne zwischen dem Messen des Schulterbreitenwerts des auf dem Sitz (100) des Fahrzeugs (200) sitzenden Benutzers und dem Messen des Schulterbreitenwerts des einem früher gespeicherten Benutzerprofil zugeordneten Benutzers basiert.

6. Verfahren nach einem der Ansprüche 1 bis 5, bei welchem das Messen des Schulterbreitenwerts des Benutzers ein Verwenden eines Berührungssensors und/oder eines Drucksensors in einem Sitz (100) des Fahrzeugs (200), auf dem der Benutzer sitzt, aufweist.

7. Verfahren nach einem der Ansprüche 1 bis 6, bei welchem das Verfahren ein Übertragen einer Benachrichtigung an einen einem früher gespeicherten Benutzerprofil zugeordneten Benutzer, falls der Schulterbreitenwert eines auf dem Sitz (100) des Fahrzeugs (200) sitzenden Benutzers nicht mit dem Schulterbreitenwert des einem früher gespeicherten Benutzerprofil zugeordneten Benutzers übereinstimmt, aufweist.

8. Verfahren nach einem der Ansprüche 1 bis 7, wobei das Verfahren aufweist:
Feststellen, dass ein Benutzer nicht mehr auf einem Sitz (100) des Fahrzeugs (200) sitzt; und
Steuern des Sitzes (100) derart, dass er in einem maximalen Abstand von einem Lenkrad des Fahrzeugs (200) positioniert ist.

9. Computerprogramm mit Anweisungen derart, dass, wenn das Computerprogramm auf einem Computergerät ausgeführt wird, das Computergerät arrangiert ist, um ein Verfahren nach einem der Ansprüche 1 bis 8 auszuführen.

10. Fahrzeug (200), wobei das Fahrzeug (200) aufweist:
ein oder mehr Sensoren (102), die ausgestaltet sind, um einen Schulterbreitenwert eines Benutzers zu messen; und
einen Prozessor (204), der konfiguriert ist, um ein Benutzerprofil für den mit dem gemessenen Schulterbreitenwert verbundenen Benutzer zu erstellen oder zu laden, wobei das Benutzerprofil ein oder mehr vom Benutzer eingestellte Fahrzeugeinstellungen enthält.

11. Fahrzeug (200) nach Anspruch 10, bei welchem sich die ein oder mehr Sensoren (102) zum Messen eines Schulterbreitenwerts eines Benutzers in ein oder mehr Schulterstützen eines Sitzes (100) des Fahrzeugs (200) befinden.

12. Fahrzeug (200) nach Anspruch 10 oder Anspruch 11, aufweisend einen Gewichtssensor (104) zum Wiegen eines auf einem Sitz (100) des Fahrzeugs (200) sitzenden Benutzers.

13. Fahrzeug (200) nach einem der Ansprüche 10 bis 12, wobei der Prozessor (204) konfiguriert ist, um:
die ein oder mehr Fahrzeugeinstellungen, die in einem früher gespeicherten Benutzerprofil enthalten sind, zu implementieren, wenn der Schulterbreitenwert eines auf dem Sitz (100) des Fahrzeugs (200) sitzenden Benutzers von dem Schulterbreitenwert eines dem früher gespeicherten Benutzerprofil zugeordneten Benutzers um weniger als ein Schwellenwert abweicht; und
ein Benutzerprofil für den dem Schulterbreitenwert eines Benutzers zugeordneten Benutzer zu erstellen, wenn der Schulterbreitenwert des auf dem Sitz (100) des Fahrzeugs (200) sitzenden Benutzers von dem Schulterbreitenwert eines einem früher gespeicherten Benutzerprofil zugeordneten Benutzers um mehr als ein Schwellenwert abweicht, wobei das Benutzerprofil für den neuen Benutzer ein oder mehr vom neuen Benutzer eingestellte Fahrzeugeinstellungen enthält.

14. Fahrzeug (200) nach einem der Ansprüche 10 bis 13, bei welchem der Prozessor (204) konfiguriert ist, um:
zu verhindern, dass ein auf dem Sitz (100) des Fahrzeugs (200) sitzender Benutzer das Fahrzeug (200) bedient, falls (i) der Schulterbreitenwert des Benutzers nicht mit einem Schulterbreitenwert eines einem früher gespeicherten Benutzerprofil zugeordneten Benutzers übereinstimmt und/oder (ii) der Schulterbreitenwert des Benutzers kleiner als ein Mindestwert ist.

15. Fahrzeug (200) nach einem der Ansprüche 10 bis 14, bei welchem der Prozessor (204) konfiguriert ist, um:
zu bewirken, dass eine Benachrichtigung an einen einem früher gespeicherten Benutzerprofil zugeordneten Benutzer übertragen wird, falls der Schulterbreitenwert eines auf dem Sitz (100) des Fahrzeugs (200) sitzenden Benutzers nicht mit dem Schulterbreitenwert des Benutzers übereinstimmt.

## Revendications

1. Procédé pour associer des paramètres de véhicule d'un véhicule (200) à un utilisateur du véhicule (200), le procédé consistant à :
obtenir un identifiant de l'utilisateur en mesurant une valeur de largeur d'épaule de l'utilisateur ;
créer ou charger un profil d'utilisateur de l'utilisateur associé à l'identifiant, le profil d'utilisateur contenant un ou plusieurs paramètres de véhicule définis par l'utilisateur.

2. Procédé selon la revendication 1, dans lequel l'obtention d'un identifiant de l'utilisateur consiste à mesurer une valeur de largeur d'épaule de l'utilisateur et une valeur de poids de l'utilisateur.

3. Procédé selon la revendication 1 ou 2, le procédé consistant à :
mesurer une valeur de largeur d'épaule d'un utilisateur assis dans un siège (100) du véhicule (200) ;
si la valeur de largeur d'épaule de l'utilisateur assis dans le siège (100) du véhicule (200) diffère de la valeur de largeur d'épaule d'un utilisateur associé à un profil d'utilisateur précédemment stocké, par moins d'un seuil, mettre en œuvre lesdits un ou plusieurs paramètres de véhicule contenus dans le profil d'utilisateur précédemment stocké ; et
si la valeur de largeur d'épaule de l'utilisateur assis dans le siège (100) du véhicule (200) diffère de la valeur de largeur d'épaule d'un utilisateur associé à un profil d'utilisateur précédemment stocké, par plus d'un seuil, créer un profil d'utilisateur du nouvel utilisateur associé à la valeur de largeur d'épaule du nouvel utilisateur, le profil d'utilisateur du nouvel utilisateur contenant un ou plusieurs paramètres de véhicule définis par le nouvel utilisateur.

4. Procédé selon la revendication 3, le procédé consistant à :
empêcher un utilisateur assis dans le siège (100) du véhicule (200) de faire fonctionner le véhicule (200) si : (i) la valeur de largeur d'épaule dudit utilisateur ne correspond pas à une valeur de largeur d'épaule d'un utilisateur associé à un profil d'utilisateur précédemment stocké, et / ou (ii) la valeur de largeur d'épaule dudit utilisateur est inférieure à une valeur minimale.

5. Procédé selon la revendication 3 ou 4, dans lequel le seuil est basé sur une période de temps entre la mesure de la valeur de largeur d'épaule de l'utilisateur assis dans le siège (100) du véhicule (200) et la mesure de la valeur de largeur d'épaule de l'utilisateur associé à un profil d'utilisateur précédemment stocké.

6. Procédé selon l'une quelconque des revendications 1 à 5, dans lequel la mesure de la valeur de largeur d'épaule de l'utilisateur consiste à utiliser un capteur tactile et / ou un capteur de pression dans un siège (100) du véhicule (200) dans lequel l'utilisateur est assis.

7. Procédé selon l'une quelconque des revendications 1 à 6, le procédé consistant à :
transmettre une notification à un utilisateur associé à un profil d'utilisateur précédemment stocké si la valeur de largeur d'épaule d'un utilisateur assis dans le siège (100) du véhicule (200) ne correspond à la valeur de largeur d'épaule de l'utilisateur associée à un profil d'utilisateur précédemment stocké.

8. Procédé selon l'une quelconque des revendications 1 à 7, le procédé consistant à :
déterminer qu'un utilisateur n'est plus assis dans un siège (100) du véhicule (200) ; et
commander le siège (100) de telle sorte qu'il soit positionné à une distance maximale d'un volant du véhicule (200).

9. Programme informatique comprenant des instructions de telle sorte que, lorsque le programme informatique est exécuté sur un dispositif informatique, le dispositif informatique est agencé pour effectuer un procédé selon l'une quelconque des revendications 1 à 8.

10. Véhicule (200), le véhicule (200) comprenant :
un ou plusieurs capteurs (102) qui sont configurés pour mesurer une valeur de largeur d'épaule d'un utilisateur ; et
un processeur (204) qui est configuré pour créer ou charger un profil d'utilisateur de l'utilisateur associé à la valeur de largeur d'épaule mesurée, le profil d'utilisateur contenant un ou plusieurs paramètres de véhicule définis par l'utilisateur.

11. Véhicule (200) selon la revendication 10, dans lequel lesdits un ou plusieurs capteurs (102) qui sont configurés pour mesurer une valeur de largeur d'épaule d'un utilisateur, sont situés dans un ou plusieurs appuie-épaules d'un siège (100) du véhicule (200).

12. Véhicule (200) selon la revendication 10 ou 11, comprenant un capteur de poids (104) pour peser un utilisateur assis sur un siège (100) du véhicule (200).

13. Véhicule (200) selon l'une quelconque des revendications 10 à 12, le processeur (204) étant configuré pour :
mettre en œuvre lesdits un ou plusieurs paramètres de véhicule contenus dans un profil d'utilisateur précédemment stocké si la valeur de largeur d'épaule d'un utilisateur assis dans le siège (100) du véhicule (200) diffère de la valeur de largeur d'épaule d'un utilisateur associé au profil d'utilisateur précédemment stocké, par moins d'un seuil ; et
créer un profil d'utilisateur d'un utilisateur associé à la valeur de largeur d'épaule de l'utilisateur si la valeur de largeur d'épaule de l'utilisateur assis dans le siège (100) du véhicule (200) diffère de la valeur de largeur d'épaule d'un utilisateur associé à un profil d'utilisateur précédemment stocké, par plus d'un seuil, le profil d'utilisateur du nouvel utilisateur contenant un ou plusieurs paramètres de véhicule définis par le nouvel utilisateur.

14. Véhicule (200) selon l'une quelconque des revendications 10 à 13, le processeur (204) étant configuré pour :
empêcher un utilisateur assis dans le siège (100) du véhicule (200) de faire fonctionner le véhicule (200) si : (i) la valeur de largeur d'épaule dudit utilisateur ne correspond pas à une valeur de largeur d'épaule d'un utilisateur associé à un profil d'utilisateur précédemment stocké, et /ou (ii) la valeur de largeur d'épaule dudit utilisateur est inférieure à une valeur minimale.

15. Véhicule (200) selon l'une quelconque des revendications 10 à 14, le processeur (204) étant configuré pour :
provoquer la transmission d'une notification à un utilisateur associé à un profil d'utilisateur précédemment stocké si la valeur de largeur d'épaule d'un utilisateur assis dans le siège (100) du véhicule (200) ne correspond pas à la valeur de largeur d'épaule de l'utilisateur.
